# EUROPEAN PATENT SPECIFICATION

(11) **EP 2 991 845 B1**
(45) Date of publication and mention of the grant of the patent: **21.10.2020**
(21) Application number: 14722945.4
(22) Date of filing: 10.04.2014
(51) Int. Cl.: B60H 1/00, B60H 1/24, B60J 9/04, B60P 3/20, B65D 88/74, F25D 17/04, F24F 9/00

(54) **REFRIGERATED CONTAINER WITH DUAL AIR CURTAIN**
KÜHLCONTAINER MIT ZWEIFACHEM LUFTVORHANG
CONTENEUR RÉFRIGÉRÉ À DOUBLE RIDEAU D'AIR

(30) Priority: 03.05.2013 US 201361819147 P
(43) Date of publication of application: 09.03.2016
(73) Proprietor: Carrier Corporation, Farmington, CT 06034 (US)
(72) Inventor: RIVIÈRE, Cédric Hervé, F-92500 Rueil-Malmaison (FR); STUMPF, André Georges, F-76520 Franqueville Saint Pierre (FR)
(74) Representative: Schmitt-Nilson Schraud Waibel Wohlfrom Patentanwälte Partnerschaft mbB
(86) International application number: PCT/US2014/033601
(87) International publication number: WO 2014/179013

(56) References cited:
- DE-A1- 10 203 036
- DE-U1-202011 005 395
- JP-A- H10 160 320

## Description

### CROSS-REFERENCE TO RELATED APPLICATION

Benefit is claimed of U.S. Patent Application Ser. No. 61/819,147, filed May 3, 2013, and entitled "Refrigerated Container with Dual Air Curtain".

### BACKGROUND

The disclosure relates to transport refrigeration. More particularly, the disclosure relates to air handling in transport refrigeration systems.

Transport refrigeration systems include cargo/shipping containers, trailers, and trucks. Each involves one or more refrigerated compartments and a refrigeration system positioned to cool a recirculating airflow within the compartment. Depending upon the implementation, refrigeration equipment may be mounted to an exterior of the container or within a subcompartment in the container. In larger trucks, the container is typically a discrete box mounted atop the truck's frame. In smaller trucks, such as light commercial vehicles (LCV), the container may be formed within an existing body structure of the vehicle.

Many truck and trailer configurations mount the equipment to the front of the container, often high on the front wall so that the outlet for discharging cooled air into the compartment is near the compartment ceiling.

An alternative configuration was proposed in Clavier et al., "Infiltration Heat Load through the Doorway of a Refrigerated Truck Protected with an Air Curtain", 23rd IIR International Congress of Refrigeration, Prague, Czech Republic, 2011. In Clavier et al., a refrigeration unit mounted atop the box near the rear end includes a first air flowpath through the evaporator and downward just ahead of the rear doorway and a second air flowpath bringing an external air curtain downward in the open doorway.

DE 10 203 036 A1 discloses a loading cavity ventilation device which is designed for use with air curtain creating device. The loading cavity ventilation device counteracts the excess pressure effect created when the doors are closed. This ventilation device is designed for use with a device for the creation of an air curtain. The air curtain is created through air apertures in the narrow sides of the truck. To suppress influence of the atmosphere in the case of opening a rear door to a small value by providing an air conditioner for diffusing the air toward forward upon reception of sensing of closing of the door and diffusing the air toward rearward upon reception of sensing of opening of the door by a sensor, according to JP H10 160 320 A that the closing of the door is sensed by a sensor. After sensing of the sensor, a fan motor is continuously reversely rotated for a predetermined time in a cooling unit. Thus, the vicinity of the door in a load chamber can be rapidly returned to a predetermined temperature. Further, after a predetermined time is elapsed, the motor is forward rotated. Then, the air cooled by a cooler is again diffused toward forward.

### SUMMARY

The invention involves a transport refrigeration system according to claim 1, comprising: a container having a doorway with at least one door; and a refrigeration system. The refrigeration system includes: a reversible first fan for driving air along an air flowpath; and a heat absorption exchanger along the air flowpath for cooling the air. A second fan is positioned to, in at least one mode of operation, drive an air curtain flow downward across the doorway.

In one or more embodiments of any of the foregoing embodiments, the refrigeration system further includes: a compressor for driving a flow of refrigerant along a refrigerant flowpath; and a heat rejection heat exchanger downstream of the compressor along the refrigerant flowpath.

In one or more embodiments of any of the foregoing embodiments, the compressor and heat rejection heat exchanger are mounted at a front of the container and the heat absorption heat exchanger is mounted at a top of the container.

In one or more embodiments of any of the foregoing embodiments, the refrigeration system has another heat absorption heat exchanger mounted along the front.

In one or more embodiments of any of the foregoing embodiments, a third fan is positioned to drive an airflow across the another heat absorption heat exchanger.

In one or more embodiments of any of the foregoing embodiments, the container is a truck box or trailer box.

In one or more embodiments of any of the foregoing embodiments, a controller is configured to: operate in a first mode wherein the door is closed and a leg of the airflow along air flowpath passes upwardly inboard of the door; and operate in a second mode wherein the door is open, a leg of airflow along the air flowpath passes downwardly adjacent the doorway, and the air curtain flow is driven downwardly across the doorway.

In one or more embodiments of any of the foregoing embodiments, in the first mode, the second fan is off.

According to the invention, method according to claim 7 for operating the system comprises: operating in a first mode wherein the door is closed and a leg of the air flowpath passes upwardly inboard of the door; and operating in a second mode wherein the door is open, a leg of the air flowpath passes downwardly adjacent the doorway, and the air curtain flow is driven downwardly across the doorway.

In one or more embodiments of any of the foregoing embodiments, the operating is switched from the first mode to the second mode responsive to detection of opening of the door.

In one or more embodiments of any of the foregoing embodiments, the operating is switched back from the second mode to the first mode responsive to detecting a closing of the door.

In one or more embodiments of any of the foregoing embodiments, switching between the first mode and second mode comprises reversing the first fan.

In one or more embodiments of any of the foregoing embodiments, in the first mode, the airflow is a generally recirculating airflow passing forward along the top.

Another aspect of the disclosure involves a method for operating a refrigerated transport system having a container having a doorway and a door. The method comprises: operating in a first mode with the door closed comprising driving an airflow along a flowpath passing through a heart exchanger acting as a heat absorption heat exchanger, the flowpath extending upward along a leg adjacent the door; and operating in a second mode with the door opened comprising driving a first airflow along a flowpath passing through heat exchanger, the flowpath extending downward along a first air curtain leg adjacent the doorway, and driving a second airflow downward along a second air curtain leg adjacent the first air curtain leg.

According to the invention, the second air flow has an exterior inlet.

In one or more embodiments of any of the foregoing embodiments, said airflow is driven by a first fan, said first airflow is driven by the first fan, and the second airflow is driven by a second fan.

In one or more embodiments of any of the foregoing embodiments, an opening of the door is detected and, responsive to the detection, operation is switched from the first mode to the second mode.

In one or more embodiments of any of the foregoing embodiments, in the second mode, the heat exchanger is defrosted.

The details of one or more embodiments are set forth in the accompanying drawings and the description below. Other features, objects, and advantages will be apparent from the description and drawings, and from the claims.

### BRIEF DESCRIPTION OF THE DRAWINGS

FIG. 1 is a simplified side sectional view of a refrigerated transport system in a first mode of operation.
FIG. 2 is a view of the system of FIG. 1 in a second mode of operation.
FIG. 3 is a simplified side sectional view of a second refrigerated transport system in a first mode of operation.
FIG. 4 is a view of the system of FIG. 3 in a second mode of operation.

Like reference numbers and designations in the various drawings indicate like elements.

### DETAILED DESCRIPTION

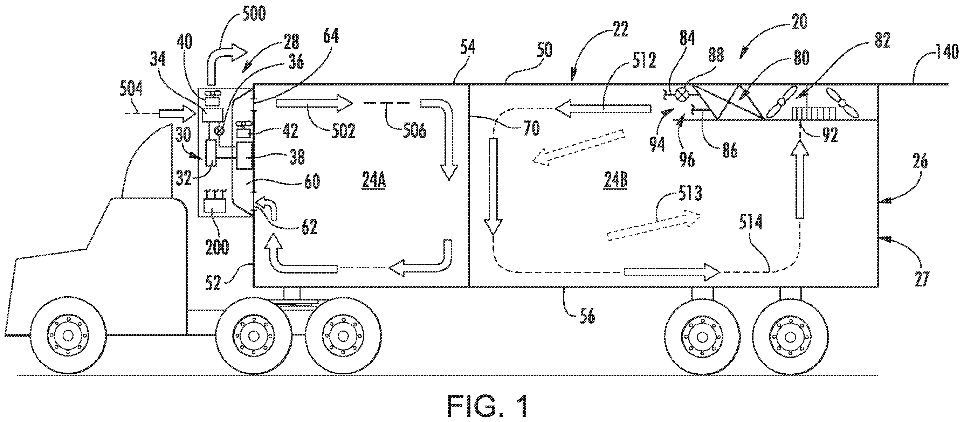

FIG. 1 shows a refrigerated transport system in the form of a trailer 20 having a container in the form of box 22 with an interior 24 (shown as two subcompartments 24A and 24B). In the exemplary box, a door (e.g., a roll-up door or a pair of side hinge doors) 26 is at a doorway 27 formed at a rear of the box. An equipment compartment (equipment box) 28 is located along a front of the box and contains the refrigeration system 30.

The exemplary refrigeration system 30 includes a vapor compression system comprising a compressor 32. Sequentially downstream of the compressor along the refrigerant flowpath are a heat rejection heat exchanger 34 (e.g., condenser or gas cooler), an expansion device 36 (e.g., electronic expansion valve (EEV)), and a heat absorption heat exchanger (evaporator) 38. These are connected via an appropriate refrigerant line. The exemplary heat exchangers are refrigerant-air heat exchangers and may have associated fans 40, 42 driving air flows thereacross. An exemplary air flow across the condenser 34 is shown as 500 and an exemplary air flow across the evaporator is shown as 502. Flows 500 and 502 pass along respective flowpaths 504 and 506. In various implementations, the equipment box 28 may also contain a power source such as an internal combustion engine driving an electric generator to, in turn, power the compressor and fan(s). Alternative implementations, may involve use of vehicle electric power. Yet alternative refrigeration systems may involve chemical or cryogenic systems with one or more heat rejection heat exchangers, positioned to cool the compartment or airflows in communication with the compartment.

An exemplary box 22 is formed of an insulated wall structure 50 on the front 52, top 54, bottom 56, and left and right sides with the door(s) 26 also being insulated. The exemplary wall 50 has at least one penetration associated with the refrigeration system. In the exemplary embodiment, the penetration involves a rear portion of the equipment box within an aperture of the front wall. The equipment box 28 defines a duct 60 extending from a first port (an inlet) 62 low along an aft wall of the box to a second port (an outlet) 64 high along the aft wall. Within the duct, along an air flowpath are the evaporator 38 and its associated fan.

Exemplary first subcompartment 24A is a forward subcompartment separated from the second subcompartment 24B by a physical barrier 70 which may be in the form of a curtain or wall. An exemplary wall is a movable partition wall (e.g., a lightweight insulated wall having a polyurethane foam core and glass fiber face sheets). Such a partition wall may include one or more doors (not shown). The flow 502 is shown as a generally recirculating flow passing aft/rearward from the outlet 64 along the underside of the box top 54 and then downwardly along the forward surface of the barrier 70, diverting forward along the box bottom 56 and then back upward to the inlet 62 along the box front 52. This illustration is schematic. In actuality, there would be branches of these flows passing through gaps between various items stored in the subcompartment 24A.

The subcompartment 24B has its own heat rejection heat exchanger (evaporator) 80 associated with its own fan 82 (e.g., electric). There are various possible configurations for connecting the evaporator 80 to the remainder of the refrigeration system. In some examples, the evaporator may be in parallel with the evaporator 38. In other examples, the evaporator 80 may be in series with the evaporator 38. In yet other examples, the evaporator 80 may have its own expansion device 88 (either in the equipment box or local to the evaporator 80; shown in a line 84 to the evaporator, a line 86 returning from the evaporator also shown) and this combination may be in parallel with the combination of the expansion device 36 and evaporator 38. Yet other arrangements are possible. The evaporator 80 and its fan 82 are positioned within a duct 90 having a first port (an inlet in a first mode) 92 and a second port (an outlet in the first mode) 94. An exemplary first mode airflow across the evaporator 80 is shown as 512. This airflow is generally schematically shown as having an outlet leg passing forwardly from the outlet 94 adjacent the underside of the box top and diverting downward along a downward leg along the rear face of the barrier 70. The airflow 512 and its associated flowpath 514 then are diverted rearward along the bottom and then back upward to the inlet 92 driven by the fan 82. FIG. 1 further schematically shows broken line diversions 513 which may pass more centrally within the compartment between various items stored in the compartment.

In one exemplary implementation, in normal operation, the two subcompartments are kept at different temperatures. For example, the first subcompartment 24A may be a frozen food compartment kept at a lower temperature than the second subcompartment 24B which may be a non-frozen perishables compartment.

In loading and unloading situations when the door(s) are opened, it is desirable to minimize air exchange between interior and exterior while maintaining cooling.

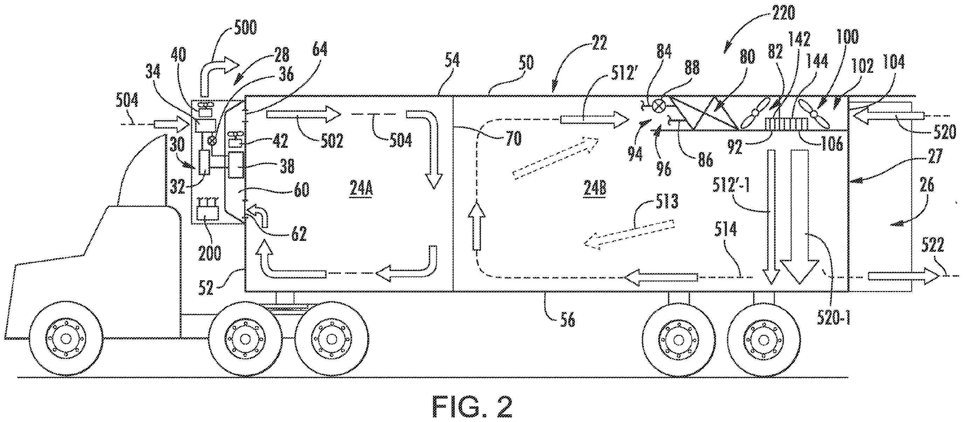

FIG. 2 shows the system 20 in a second mode for loading and unloading wherein the door(s) 26 are open. The second mode makes use of an additional fan 100 for driving an air flow 520 along a flowpath 522 downward adjacent the doorway 27 to form an air curtain 520-1. The exemplary fan 100 is in a duct 102 having an inlet 104 and an outlet 106. The exemplary inlet 104 may be high along the rear of the doorway or may be along the top of the box. The outlet 106 is spaced forward along the duct 102 and may be adjacent the first port 92 of the duct 90. This air curtain flow returns to the exterior of the vehicle adjacent the bottom of the doorway. FIG. 2 also shows a reversal of the direction of the flow 512 (to become 512') relative to the normal FIG. 1 first mode. This causes the port 94 to become an inlet and the port 92 to become an outlet. The leg of the flow 512' exiting the port 92 forms an air curtain 512'-1 just inboard of the air curtain 520. There may be some communication/mixing between the two air curtains. However, the total communication between interior and exterior may be reduced relative to a baseline wherein there is only the air curtain formed by the flow 512.

In the FIG. 1 mode, the forward discharge of the flow 512 along the underside of the box top helps project the cool air deep into the box for cooling. In the FIG. 2 mode, the reversed direction discharging downward may provide one or more of several benefits. First, it may allow a more defined curtain flow. Also, it may reduce the amount of air exchange with portions of the box more remote from the door and thereby reduce the tendency for infiltrated ambient air to warm contents in such portions.

FIG. 1 further shows an aerodynamic roof extension 140 which may help guide air into the duct 102. FIG. 2 also shows honeycomb materials 142 and 144 at the ports 92 and 106 for collimating the second mode air curtain flows.

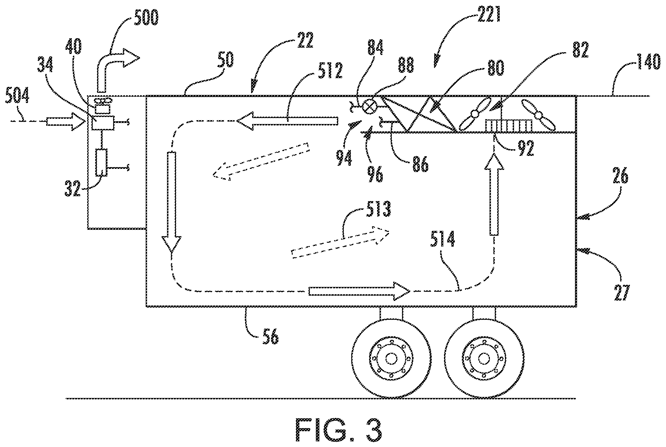

FIG. 3 shows a single-compartment trailer 220 wherein the evaporator 80 is the only evaporator but the compressor 32 and condenser 34 are still located at the front of the box 221. Other features may be the same or similar to the trailer 20. FIG. 3 shows a normal first mode (door(s) closed) operation similar to FIG. 1.

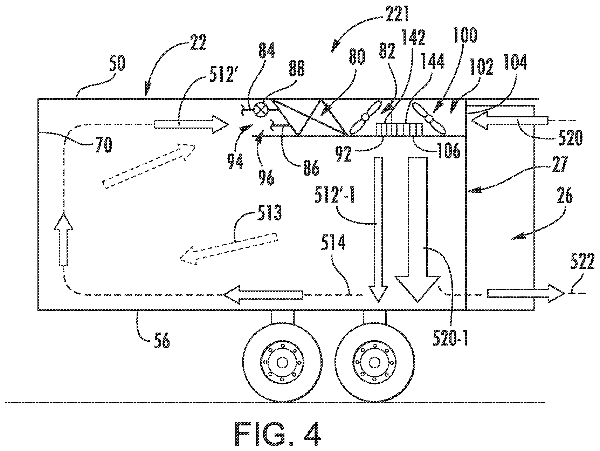

FIG. 4 shows the system FIG. 3 in a second (door(s) open) mode of operation similar to FIG. 2.

In a further variation of either of the foregoing systems, the equipment box may be repositioned as an undermount box. In yet other variations, the vapor compression system may be replaced with a different technology. An exemplary alternative technology is a cryogenic system wherein a refrigerant such as liquid nitrogen is stored in a tank and expanded in one or more expansion devices before being passed through one or more heat absorption heat exchangers and then vented to atmosphere.

In either of the embodiments 20, 220, operation may be controlled by a controller 200. The exemplary controller 200 may be a conventional controller (e.g., having a processor, memory, and/or storage for storing and executing control instructions) controlling various aspects of system operation but may be modified with routines/algorithms to perform the additional functions described herein. Thus, the controller 200 may be programmed to switch between the two modes. Exemplary switching between the modes is responsive to detected opening and/or closing of the door(s) 26 (e.g., via a door sensor (e.g., a simple switch, not shown)). In one example, opening a door either opens or closes an associated switch. Responsive to the change of switch state indicating door opening. Upon door closing, the controller system returns to the first mode. The controller engages the second mode by reversing direction (e.g., of motor rotation) of the fan 82 and starting the fan 100. Thus, the fan 82 is a reversible fan (e.g., an axial fan) and the controller is configured to reverse the direction of the fan as needed to switch between modes.

In an example of a further variation, the second mode may be associated with a defrost cycle (either always or selectively such as under automated control). This may piggyback on existing control protocols, sensors, and the like of a baseline system. For example, the baseline system may be programmed to determine frost buildup. In the modified two-mode system, if a threshold of frost buildup has been determined, then the door opening triggers the programming to implement defrosting in addition to the second mode.

The defrosting may involve heating the evaporator(s), in particular the remote evaporator 80. This heating may be a resistive electric heating or may comprise reversing refrigerant flow. Despite the heating, the airflow across the evaporator will still be cooled by the frost buildup (even as it melts to drain away). Especially if there is high ambient humidity, defrosting while the door is open is particularly beneficial. If the door is open and the evaporator is in a cooling mode (rather than defrost mode) there would be increased frost buildup which might later have to be defrosted at an inopportune time (e.g., when the door is closed and cooling is desired). Alternatively, the defrosting may merely involve terminating refrigerant flow through the evaporator 80 and allowing the air driven over the frost buildup to melt the frost buildup. Based upon sensed and/or calculated conditions which may include one or more of an amount of buildup and ambient and interior humidity and temperatures, the controller may determine whether to enter defrost mode when switching to the second mode and which form of defrost mode to utilize.

The use of "first", "second", and the like in the description and following claims is for differentiation within the claim only and does not necessarily indicate relative or absolute importance or temporal order. Similarly, the identification in a claim of one element as "first" (or the like) does not preclude such "first" element from identifying an element that is referred to as "second" (or the like) in another claim or in the description.

One or more embodiments have been described. Nevertheless, it will be understood that various modifications may be made. For example, when applied to an existing basic system, details of such configuration or its associated use may influence details of particular implementations. Accordingly, other embodiments are within the scope of the following claims.

## Claims

1. A transport refrigeration system comprising:
a container (22) having a doorway (27) with at least one door (26); and
a refrigeration system (30) including:
a reversible first fan (82) for driving a first air flow (512) along an air flowpath;
a heat absorption exchanger (80) along the air flowpath for cooling the air; and
a second fan (100) positioned to in at least one mode of operation drive a second air flow including an air curtain flow (520-1) downward across the doorway, wherein the second air flow has an exterior inlet (104).

2. The system of claim 1 wherein the refrigeration system (30) further includes:
a compressor (32) for driving a flow of refrigerant along a refrigerant flowpath; and
a heat rejection heat exchanger (34) downstream of the compressor along the refrigerant flowpath.

3. The system of claim 2 wherein:
the compressor and heat rejection heat exchanger are mounted at a front of the container; and
the heat absorption heat exchanger is mounted at a top of the container.

4. The system of claim 2 wherein:
the refrigeration system has another heat absorption heat exchanger (38) mounted along the front, wherein in particular a third fan (42) is positioned to drive an airflow (502) across the another heat absorption heat exchanger.

5. The system of claim 1 wherein:
the container is a truck box or trailer box.

6. The system of claim 1 further comprising a controller configured to:
operate in a first mode wherein the door is closed and a leg (512-1) of the airflow (512) along air flowpath (514) passes upwardly inboard of the door; and
operate in a second mode wherein:
the door is open;
a leg (512-1') of airflow (512') along the air flowpath (514) passes downwardly adjacent the doorway; and
the air curtain flow is driven downwardly across the doorway, wherein in particular the second fan (100) is off in the first mode.

7. A method for operating the system of claim 1, the method comprising:
operating in a first mode wherein the door is closed and a leg of the air flowpath passes upwardly inboard of the door; and
operating in a second mode wherein:
the door is open;
a leg of the air flowpath passes downwardly adjacent the doorway; and
the air curtain flow is driven downwardly across the doorway.

8. The method of claim 7 wherein:
the operating is switched from the first mode to the second mode responsive to detection of opening of the door.

9. The method of claim 7 further comprising:
switching back from the second mode to the first mode responsive to detecting a closing of the door.

10. The method of claim 7 wherein:
switching between the first mode and second mode comprises reversing the first fan.

11. The method of claim 7 wherein:
the first mode, the airflow is a generally recirculating airflow passing forward along the top.

12. A method for operating a refrigerated transport system having a container (22) having a doorway (27) and a door (26), the method comprising:
operating in a first mode with the door closed comprising driving an airflow along a flowpath passing through a heat exchanger acting as a heat absorption heat exchanger, the flowpath extending upward along a leg adjacent the door; and
operating in a second mode with the door opened comprising:
driving a first airflow along a flowpath passing through the heat exchanger, the flowpath extending downward along a first air curtain leg adjacent the doorway; and
driving a second airflow downward along a second air curtain leg adjacent the first air curtain leg,
wherein the second air flow has an exterior inlet (104).

13. The method of claim 12 wherein:
said airflow is driven by a first fan (82);
said first airflow is driven by the first fan (82); and
the second airflow is driven by a second fan (100).

14. The method of claim 12 further comprising:
detecting an opening of the door; and
responsive to the detecting, switching operation from the first mode to the second mode.

15. The method of claim 12 wherein:
in the second mode, the heat exchanger is defrosted.

## Patentansprüche

1. Transportkühlsystem, umfassend:
einen Container (22), der eine Türöffnung (27) mit mindestens einer Tür (26) aufweist; und
ein Kühlsystem (30), das Folgendes beinhaltet:
einen umkehrbaren ersten Lüfter (82) zum Treiben eines ersten Luftstroms (512) entlang eines ersten Luftströmungswegs;
einen Wärmeaufnahme-Wärmetauscher (80) entlang des Luftströmungswegs zum Kühlen der Luft; und
einen zweiten Lüfter (100), der so angeordnet ist, dass er in mindestens einem Betriebsmodus einen zweiten Luftstrom, der einen Luftvorhangsstrom (520-1) beinhaltet, über die Türöffnung nach unten treibt, wobei der zweite Luftstrom einen äußeren Einlass (104) aufweist.

2. System nach Anspruch 1, wobei das Kühlsystem (30) ferner Folgendes beinhaltet:
einen Kompressor (32) zum Treiben eines Stroms eines Kältemittels entlang eines Kältemittelströmungswegs; und
einen Wärmeabgabe-Wärmetauscher (34) entlang des Kältemittelströmungswegs stromabwärts des Kompressors.

3. System nach Anspruch 2, wobei:
der Kompressor und der Wärmeabgabe-Wärmetauscher an einer Vorderseite des Containers angebracht sind; und
der Wärmeaufnahme-Wärmetauscher an einer Oberseite des Containers angebracht ist.

4. System nach Anspruch 2, wobei:
das Kühlsystem einen weiteren Wärmeaufnahme-Wärmetauscher (38) aufweist, der entlang der Vorderseite angebracht ist, wobei insbesondere ein dritter Lüfter (42) so angeordnet ist, dass er einen Luftstrom (502) über den weiteren Wärmeaufnahme-Wärmetauscher treibt.

5. System nach Anspruch 1, wobei:
der Container ein Lastwagenkasten oder Anhängerkasten ist.

6. System nach Anspruch 1, ferner ein Steuergerät umfassend, das zu Folgendem konfiguriert ist:
Betrieb in einem ersten Modus, in dem die Tür geschlossen ist und ein Abschnitt (512-1) des Luftstroms (512) entlang des Luftströmungswegs (514) auf der Innenseite der Tür nach oben verläuft; und
Betrieb in einem zweiten Modus, in dem:
die Tür offen ist;
ein Abschnitt (512-1') des Luftstroms (512') entlang des Luftströmungswegs (514) an die Türöffnung angrenzend nach unten verläuft; und
der Luftvorhangstrom über die Türöffnung nach unten getrieben wird, wobei insbesondere der zweite Lüfter (100) im ersten Modus ausgeschaltet ist.

7. Verfahren zum Betrieb des Systems nach Anspruch 1, wobei das Verfahren Folgendes umfasst:
Betrieb in einem ersten Modus, in dem die Tür geschlossen ist und ein Abschnitt des Luftströmungswegs auf der Innenseite der Tür nach oben verläuft; und
Betrieb in einem zweiten Modus, in dem:
die Tür offen ist;
ein Abschnitt des Luftströmungswegs an die Türöffnung angrenzend nach unten verläuft; und der Luftvorhangstrom über die Türöffnung nach unten getrieben wird.

8. Verfahren nach Anspruch 7, wobei:
der Betrieb in Reaktion auf das Öffnen der Tür von dem ersten Modus in den zweiten Modus umgeschaltet wird.

9. Verfahren nach Anspruch 7, ferner Folgendes umfassend:
Zurückschalten von dem zweiten Modus in den ersten Modus in Reaktion auf das Erkennen eines Schließens der Tür.

10. Verfahren nach Anspruch 7, wobei:
das Umschalten zwischen dem ersten Modus und dem zweiten Modus das Umkehren des ersten Lüfters umfasst.

11. Verfahren nach Anspruch 7, wobei:
in dem ersten Modus der Luftstrom ein im Wesentlichen umlaufender Luftstrom ist, der entlang der Oberseite nach vorne verläuft.

12. Verfahren zum Betrieb eines gekühlten Transportsystems, das einen Container (22) aufweist, der eine Türöffnung (27) und eine Tür (26) aufweist, wobei das Verfahren Folgendes umfasst:
Betrieb in einem ersten Modus mit geschlossener Tür, der das Treiben eines Luftstroms entlang eines Strömungswegs umfasst, der durch einen Wärmetauscher verläuft, der als ein Wärmeaufnahme-Wärmetauscher arbeitet, wobei sich der Strömungsweg entlang eines an die Tür angrenzenden Abschnitts nach oben erstreckt; und Betrieb in einem zweiten Modus mit geöffneter Tür, der Folgendes umfasst:
Treiben eines ersten Luftstroms entlang eines Strömungswegs, der durch den Wärmetauscher verläuft, wobei sich der Strömungsweg entlang eines ersten, an die Türöffnung angrenzenden Luftvorhangabschnitts nach unten erstreckt; und
Treiben eines zweiten Luftstroms entlang eines zweiten, an den ersten Luftvorhangabschnitt angrenzenden Luftvorhangabschnitts nach unten,
wobei der zweite Luftstrom einen äußeren Einlass (104) aufweist.

13. Verfahren nach Anspruch 12, wobei:
der Luftstrom von einem ersten Lüfter (82) getrieben wird;
der erste Luftstrom von einem ersten Lüfter (82) getrieben wird; und
der zweite Luftstrom von einem zweiten Lüfter (100) getrieben wird.

14. Verfahren nach Anspruch 12, ferner Folgendes umfassend:
Erkennen eines Öffnens der Tür; und
als Reaktion auf das Erkennen, Umschalten des Betriebs von dem ersten Modus in den zweiten Modus.

15. Verfahren nach Anspruch 12, wobei:
im der Wärmetauscher zweiten Modus entfrostet wird.

## Revendications

1. Système de réfrigération de transport comprenant :
un conteneur (22) ayant un porte (27) avec au moins une porte (26) ; et
un système de réfrigération (30) comportant :
un premier ventilateur réversible (82) pour entraîner un premier écoulement d'air (512) le long d'un chemin d'écoulement d'air ;
un échangeur d'absorption de chaleur (80) le long du chemin d'écoulement d'air pour refroidir l'air ; et
un deuxième ventilateur (100) positionné pour, dans au moins un mode de fonctionnement, entraîner un second écoulement d'air comportant un écoulement de rideau d'air (520-1) vers le bas à travers l'entrée, le second écoulement d'air ayant une entrée extérieure (104).

2. Système selon la revendication 1, dans lequel le système de réfrigération (30) comporte en outre :
un compresseur (32) pour entraîner un écoulement de réfrigérant le long d'un chemin d'écoulement de réfrigérant ; et un échangeur de chaleur à rejet de chaleur (34) en aval du compresseur le long du chemin d'écoulement de réfrigérant.

3. Système selon la revendication 2, dans lequel :
le compresseur et l'échangeur de chaleur à rejet de chaleur sont montés à l'avant du conteneur ; et
l'échangeur de chaleur à absorption de chaleur est monté au sommet du conteneur.

4. Système selon la revendication 2, dans lequel :
le système de réfrigération a un autre échangeur de à absorption de chaleur (38) monté le long de l'avant, dans en particulier un troisième ventilateur (42) est positionné entraîner un écoulement d'air (502) à travers l'autre de chaleur à absorption de chaleur.

5. Système selon la revendication 1, dans lequel :
le conteneur est une caisse de camion ou une caisse de remorque.

6. Système selon la revendication 1, comprenant en outre un dispositif de commande configuré pour :
fonctionner dans un premier mode dans lequel la porte est fermée et un tronçon (512-1) de l'écoulement d'air (512) le long du chemin d'écoulement d'air (514) passe vers le haut à l'intérieur de la porte ; et
fonctionner dans un second mode dans lequel :
la porte est ouverte ;
un tronçon (512-1') d'écoulement d'air (512') le long du chemin d'écoulement d'air (514) passe vers le bas à côté de l'entrée ; et
l'écoulement de rideau d'air est entraîné vers le bas à travers la porte, dans lequel en particulier le deuxième ventilateur (100) est arrêté dans le premier mode.

7. Procédé de fonctionnement du système selon la revendication 1, le procédé comprenant :
le fonctionnement dans un premier mode dans lequel la porte est fermée et un tronçon du chemin d'écoulement d'air passe vers le haut à l'intérieur de la porte ; et
le fonctionnement dans un second mode dans lequel :
la porte est ouverte ;
une jambe du chemin d'écoulement d'air passe vers le bas à côté de la porte ; et l'écoulement de rideau d'air est entraîné vers le bas à travers la porte.

8. Procédé selon la revendication 7, dans lequel :
le fonctionnement est commuté du premier mode au second mode en réponse à la détection d'une ouverture de la porte.

9. Procédé selon la revendication 7 comprenant en outre :
le rebasculement du second mode dans le premier mode en réponse à la détection d'une fermeture de la porte.

10. Procédé selon la revendication 7, dans lequel :
la commutation entre le premier mode et le second mode comprend l'inversion du premier ventilateur.

11. Procédé selon la revendication 7, dans lequel :
le premier mode, l'écoulement d'air est un écoulement d'air généralement à recirculation passant vers l'avant le long du sommet.

12. Procédé de fonctionnement d'un système de transport réfrigéré ayant un conteneur (22) équipé d'une entrée (27) et d'une porte (26), le procédé comprenant :
le fonctionnement dans un premier mode avec la porte fermée comprenant l'entraînement d'un écoulement d'air le long d'un chemin d'écoulement passant à travers un échangeur de chaleur agissant comme un échangeur de chaleur à absorption de chaleur, le chemin d'écoulement s'étendant vers le haut le long d'un tronçon adjacent à la porte ; et le fonctionnement dans un second mode avec la porte ouverte comprenant :
l'entraînement d'un premier écoulement d'air le long d'un chemin d'écoulement traversant l'échangeur de chaleur, le chemin d'écoulement s'étendant vers le bas le long d'un premier tronçon de rideau d'air adjacent à la porte ; et
l'entraînement d'un second écoulement d'air vers le bas le long d'un second tronçon de rideau d'air adjacent au premier tronçon de rideau d'air,
dans lequel le second écoulement d'air a une entrée (104) .

13. Procédé selon la revendication 12, dans lequel :
ledit écoulement d'air est entraîné par un premier ventilateur (82) ;
ledit premier écoulement d'air est entraîné par le premier ventilateur (82) ; et
le second écoulement d'air est entraîné par un deuxième ventilateur (100).

14. Procédé selon la revendication 12, comprenant en outre :
la détection d'une ouverture de la porte ; et
en réponse à la détection, l'opération de commutation du premier mode au second mode.

15. Procédé selon la revendication 12, dans lequel :
dans le second mode, l'échangeur de chaleur est dégivré.
